# EUROPEAN PATENT APPLICATION

(11) **EP 2 119 484 A1**
(43) Date of publication of application: **18.11.2009**
(21) Application number: 08703020.1
(22) Date of filing: 09.01.2008
(51) Int. Cl.: B01D 19/00, B29B 13/00, B29K 19/00

(54) **DEFOAMING DEVICE AND FORMING DEVICE WITH THE SAME**

(30) Priority: 12.01.2007 JP 2007004366
(71) Applicant: Dow Corning Toray Co., Ltd., Tokyo 100-0005 (JP)
(72) Inventor: SUTO, Fumitaka, Awara-shi Fukui 919-0603 (JP)
(74) Representative: Greene, Simon Kenneth
(86) International application number: PCT/JP2008/050149
(87) International publication number: WO 2008/084813

(57) **Abstract**

A defoaming device for a viscosity fluid, equipped with a container or containers having a receiving section for the viscosity fluid, and a supply port and an outlet for the viscosity fluid, communicated with the receiving section, the defoaming device being provided with: a supply pipe for supplying the viscosity fluid to the supply port; a supply control device for the viscosity fluid at the supply port; a sprinkler for discharging the viscosity fluid supplied from the supply port into the receiving section; a pressure control device for controlling a pressure in the receiving section; an outlet tube for discharging the viscosity fluid from the outlet; and an outlet control device for the viscosity fluid in the outlet, as well as, a molding system provided with the defoaming device. The defoaming device of the present invention can effectively defoam a high viscosity fluid such as a liquid silicone rubber, does not need a complicated defoaming device, and can continuously supply the defoamed viscosity fluid. In addition, the molding system of the present invention can provide a molded product in which no air bubbles or chips occur.

## Description

### TECHNOLOGICAL FIELD

The present application claims priority on the basis of Japanese Patent Application No. 2007-4366, filed in Japan on January 12, 2007, which is hereby incorporated by reference.

The present invention relates to a defoaming device for a viscosity fluid such as a liquid silicone rubber or the like, and also relates to a molding system equipped with the aforementioned defoaming device.

### BACKGROUND ART

Conventionally, in a molding system for a molding material composed of a viscosity fluid such as a liquid silicone rubber or the like, in general, the molding material is supplied to a molding machine by means of a drum pump or the like, via a volumetrical supplyer, if necessary.

However, for example, when a drum pump is installed on a drum of a molding material, or when the remaining amount of the molding material in the drum is reduced and dry injection by the drum pump occurs, air may be contaminated in the molding material which is being supplied. In particular, when a high viscosity fluid having high thixotropy and poor fluidity, such as a liquid silicone rubber, is used as a molding material, even if a sufficient amount of the liquid silicone rubber remains in the drum, in some types of drum pumps, dry injection may frequently occur, and air tends to be contaminated in the liquid silicone rubber. If air is contaminated in the molding material to form air bubbles, as described above, it is impossible to quantitatively supply the molding material, and air bubbles or chips occur in a molded product. The contamination of air as described above may occur not only in the step of supplying the material by means of a drum pump, but also potentially in all operations for treating a fluid.

For example, in the case of supplying a molding material by means of a drum pump, in order to prevent dry injection, the drum pump is stopped in the state of a large amount of the molding material remaining in the drum, and the drum is then exchanged. However, in this case, loss of the molding material is increased, and this is inefficient. In addition, in the case of observing the actuation cycles of the drum pump, detecting dry injection by the cycle variation, and thereby, detecting an occurrence of dry injection, there is an approach in which the drum pump is immediately stopped, and thereby, the contamination of air in the molding material is prevented. However, when an intermittent volumetrical supplying of the molding material is required, as in the case of injection molding, there is a problem in that it is virtually impossible to detect dry injection by the cycle variation.
In addition, even in the approach, the contamination of air in the molding material at the time of changing the drum cannot be prevented. Therefore, there is a problem in that it is necessary to remove air bubbles in a line for supplying the molding material to a molding machine at the time of changing the drum.

In order to address the aforementioned problems, defoaming is carried out before the molding material is supplied to a molding machine. For example, as described in Japanese Unexamined Patent Application, First Publication No. H06-142409, a defoaming device in which the molding material is stirred in order to perform defoamation is known.
[Patent Document 1] Japanese Unexamined Patent Application, First Publication No. H06-142409

### DISCLOSURE OF THE INVENTION

### Problems to be Solved by the Invention

I n the case of using a high viscosity fluid such as a liquid silicone rubber, it is physically difficult to uniformly stir the fluid, and it is virtually impossible to completely remove air bubbles by stirring. In addition, the defoaming device is complicated due to the stirring mechanism or the like. Therefore, defoaming by a stirring operation is not preferable from a practical point of view. In addition, during the defoaming operation, supplying of the molding material to the molding machine is disrupted, and for this reason, continuous molding operations cannot be carried out.

Under the circumstances in the prior art as described above, the present invention was completed. An objective of the present invention is to provide a defoaming device for a viscosity fluid, in which defoaming can be effectively carried out even in a high viscosity fluid such as a liquid silicone rubber or the like, a complicated defoaming mechanism is not required, and the defoamed viscosity fluid can be continuously supplied to a molding machine or the like.

In addition, an objective of the present invention is also to provide a molding system for a viscosity fluid, provided with the aforementioned defoaming device, in which a continuous run can be carried out for a long time, and air bubbles or chips do not occur in a molded product.

### Means for Solving the Problems

The objective of the present invention can be achieved by a defoaming device for a viscosity fluid equipped with a container or containers which has/have a receiving section for the viscosity fluid, and has a supply port and an outlet for the aforementioned viscosity fluid, communicated with the aforementioned receiving section, comprising:
a supply pipe for supplying said viscosity fluid to said supply port;
a supply control device for said viscosity fluid at said supply port;
a sprinkler for discharging said viscosity fluid supplied from said supply port into said receiving section;
a pressure control device for controlling a pressure in said receiving section; an outlet tube for discharging said viscosity fluid from said outlet; and
an outlet control device for said viscosity fluid at said outlet. The number of said containers may be two or more.

Said sprinkler preferably has holes and/or slits for discharging said viscosity fluid.

Said defoaming device is preferably provided with a plate which covers at least one part of the surface of said viscosity fluid in said receiving section and can move within the aforementioned receiving section to a direction toward said outlet. As the covered part, the surface adjacent to said outlet for said viscosity fluid is preferable.

In particular, it is preferable that said sprinkler be arranged in the form of a circle, and said plate be able to pass through the inner side of the aforementioned circle.

In addition, said plate can possess a function of said sprinkler, if necessary.

The viscosity of the viscosity fluid to be defoamed by means of the defoaming device of the present invention preferably ranges from 1,000 to 50,000,000 mPa·s, more preferably ranges from 10,000 to 10,000,000 mPa·s, and further preferably ranges from 900,000 to 10,000,000 mPa·s. The defoaming device of the present invention can be suitably used for a liquid silicone rubber with a high viscosity, and in particular, having the viscosity within the aforementioned range.

In addition, the objectives of the present invention can also be achieved by a molding system comprising:
the aforementioned defoaming device; and
a molding machine for said viscosity fluid discharged from said outlet of said defoaming device.

In said molding system, a volumetrical supplyer for said viscosity fluid is preferably provided between said defoaming device and said molding machine.

### EFFECTS OF THE INVENTION

The defoaming device of the present invention can effectively defoam even a high viscosity fluid such as liquid silicone rubber or the like. In addition, the defoaming device of the present invention does not require a complicated defoaming mechanism such as a stirrer and the like, and defoaming operations can be continuously carried out by means of a simple mechanism. In the case of providing plural tanks in the defoaming device of the present invention, a defoamed viscosity fluid can be continuously supplied by repeating an operation in which while a viscosity fluid defoamed in one tank is being discharged, a viscosity fluid is defoamed in another tank.

In addition, the molding system of the present invention is provided with the aforementioned defoaming device, and thereby, even if a high viscosity fluid such as a liquid silicone rubber or the like is used as a molding material, no air bubbles or chips occur in a molded product. In addition, it is not necessary to interrupt the operation of the molding system in order to defoam the molding material. For this reason, continuous operations for a long time can be performed.

In particular, in the case of supplying the viscosity fluid as a molding material by means of a drum pump, even if dry injection occurs in the drum pump, air bubbles contaminated due to the dry injection can be completely removed from the viscosity fluid in the aforementioned defoaming device. For this reason, it is not necessary to change a drum in the state of a large amount of the viscosity fluid remaining in the drum in order to prevent dry injection. Therefore, loss of the molding material can be reduced, and molding can be effectively carried out.

### BEST MODES FOR CARRYING OUT THE INVENTION

Hereinafter, embodiments of the present invention are described with reference to the drawings. First, a defoaming device of the present invention is described.

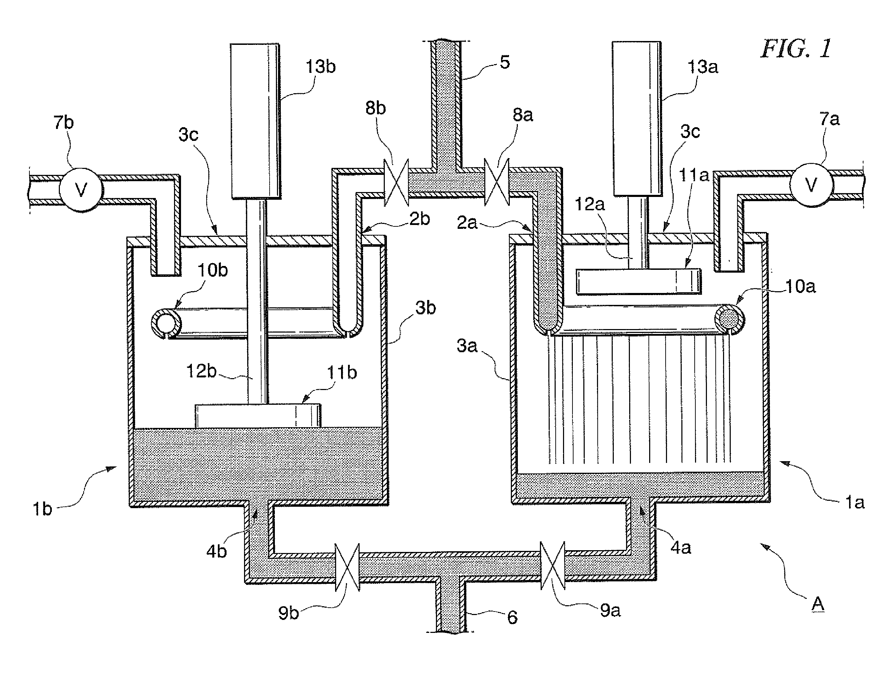

Fig. 1 is a cross-sectional view showing one embodiment of a defoaming device for a viscosity fluid of the present invention. The defoaming device A of the embodiment shown in Fig. 1 defoams a liquid silicone rubber having a high viscosity ranging from 1,000 to 50,000,000 mPa·s as a viscosity fluid. The defoaming device A is provided with two tanks 1 a, 1 b, each in a cylindrical form as a container for defoaming.

In defoaming device A of the present invention, two tanks 1a, 1b, are respectively provided with supply ports 2a, 2b; receiving sections 3a, 3b; and outlets 4a, 4b, for the liquid silicone rubber. The liquid silicone rubber supplied from supply ports 2a, 2b via supply pipe 5 which is not shown in the drawing in detail is received in receiving sections 3a, 3b, and is discharged from outlets 4a, 4b, via outlet tube 6 which is not shown in the drawing in detail.

Tanks 1a, 1b, have respectively vacuum pumps 7a, 7b, as a pressure control device which can reduce and increase the pressure within receiving sections 3a, 3b, and have valves for recovering pressure, which are not shown in the drawing. By means of drive control of vacuum pumps 7a, 7b and the valves for recovering pressure, the pressure within receiving sections 3a, 3b can be appropriately adjusted.

In addition, tanks 1a, 1b respectively have valves 8a, 8b as a supply control device for supply ports 2a, 2b, and respectively have valves 9a, 9b as an outlet control device for outlets 4a, 4b. In the embodiment shown in Fig. 1, supply ports 2a, 2b are openable and closable by means of valves 8a, 8b in any timing, and outlets 4a, 4b are openable and closable by means of valves 9a, 9b in any timing.

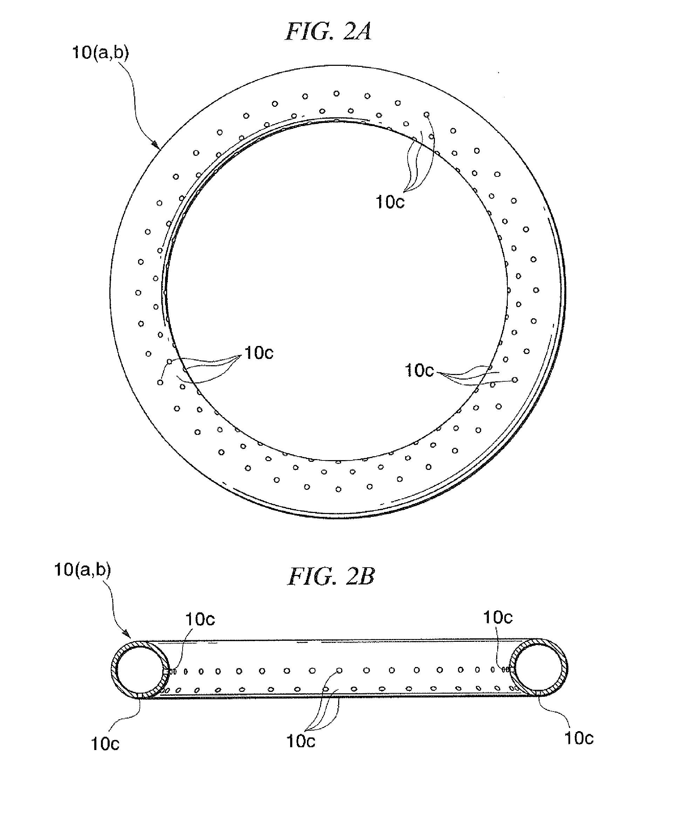

In addition, tanks 1a, 1b are respectively provided with sprinklers 10a, 10b for discharging the liquid silicone rubber supplied from supply ports 2a, 2b to receiving sections 3a, 3b. In the embodiment shown in Fig. 1, each of sprinklers 10a, 10b is composed of a hollow circular pipe at which many holes 10c are formed, as shown in Fig. 2. Sprinklers 10a, 10b are not limited to a circular form, and can be in any form such as a general square form, a general rectangle form, or the like, depending on the form of tanks 1a, 1b. In the embodiment shown in Fig. 1, sprinklers 10a, 10b are respectively fixed to ceilings 3c of receiving sections 3a, 3b of tanks 1 a, 1 b. The liquid silicone rubber supplied to sprinklers 10a, 10b from supply ports 2a, 2b is showerly discharged from holes 10c to the upper parts of receiving sections 3a, 3b, and naturally drops to the lower parts of receiving sections 3a, 3b.

In addition, tanks 1a, 1b are respectively provided with plates 11a, 11b in the form of a disc, connected to rods 12a, 12b penetrating ceilings 3c of receiving sections 3a, 3b. Plates 11a, 11b can cover at least one part of the surface of the liquid silicone rubber in receiving sections 3a, 3b. In addition, rods 12a, 12b are vertically drive-controllable by means of actuators 13a, 13b. Thereby, plates 11a, 11b are vertically movable in the inner space of cylindrical sprinklers 10a, 10b in receiving sections 3a, 3b, in the direction to outlets 4a, 4b.

In the embodiment shown in Fig. 2, hollow circular sprinkler 10(a, b) has a circular cross section. Many holes 10c are opened in the vertical direction from the center of the aforementioned cross section, in the horizontal direction of the center side (inner side) of sprinkler 10(a, b), and in about a 45° lower direction from the center side (inner side) of sprinkler 10(a, b). If holes 10c are opened toward the wall surface of receiving section 3(a, b), the liquid silicone rubber discharged from holes 10c reaches the aforementioned wall face, and drops along with the wall face. For this reason, a defoaming efficiency may be reduced. Therefore, holes 10c are preferably opened toward the center side of sprinkler 10(a, b), as shown in Fig. 2. In the embodiment shown in Fig. 2, holes 10c formed on sprinkler 10(a, b) are in the form of a circle having a diameter of several millimeters. Holes 10c may have various forms such as an ellipse form, a square form, and the like, in addition to the circular form. In addition, in the embodiment shown in Fig. 2, holes 10c are circularly arranged in three lines with equal intervals. The arrangement and intervals of holes 10c are not limited, and can be appropriately adjusted, if necessary.

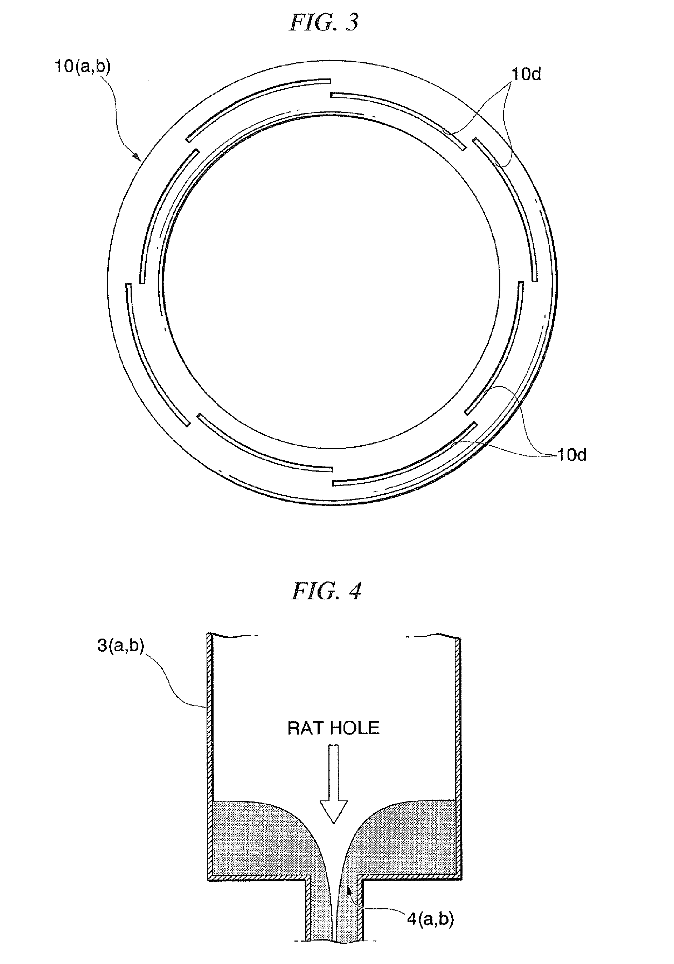

Fig. 3 is a lower plan view showing another embodiment of sprinklers 10a, 10b. In the embodiment, slits 10d having a width of several millimeters are formed at the lower face of sprinkler 10(a, b), In the embodiment shown in Fig. 3, slits 10d are circularly arranged in two lines. Any arrangement and intervals of slits 10d can be selected, and can be appropriately adjusted, if necessary. For example, many slits 10d may be radially formed in the radical direction of circular sprinklers 10a, 10b.

In the embodiment shown in Fig. 1, the liquid silicone rubber preferably drops down from sprinklers 10a, 10b to the lower part of receiving sections 3a, 3b as uniformly as possible. Therefore, in order to uniformly drop the liquid silicone rubber, both holes 10c and slits 10d may be formed in sprinklers 10a, 10b, if necessary. In addition, in a part of sprinklers 10a, 10b, no holes 10c or no slits 10d may be formed.

Next, operations of the defoaming device shown in Fig. 1 are described. In defoaming device A, a defoaming operation and a discharging operation of the liquid silicone rubber are alternatively carried out in tanks 1 a, 1 b. Here, an embodiment in which a defoaming operation is first carried out in tank 1a is described.

First, vacuum pump 7a is driven, so that the inner circumstance of receiving section 3a is under reduced pressure. Subsequently, valve 8a is opened in the state in which valve 8b is closed. Thereby, the liquid silicone rubber supplied from supply pipe 5 is introduced into the inner space of sprinkler 10a in the form of a hollow circle via supply port 2a. The liquid silicone rubber introduced in the inner space of sprinkler 10a is showerly discharged from holes 10c formed at the surface of sprinkler 10a at the upper part of receiving section 3a of tank 1a. The liquid silicone rubber discharged into receiving section 3a freely drops from the upper part to the lower part of receiving section 3a.

In receiving section 3a, when the liquid silicone rubber passes through holes 10c of sprinkler 10a, air bubbles having a particle size larger than the hole size of holes 10c can be removed from the liquid silicone rubber. In addition, the surface area of the liquid silicone rubber is increased by shower-like drops. For this reason, air bubbles with a small size which pass through holes 10c can be removed from the liquid silicone rubber in a relatively short period, interdependently with the reduced pressure in receiving section 3a. Thereby, defoaming can be effectively performed without stirring a high viscosity fluid such as a liquid silicone rubber. The discharged amount and discharging rate of the liquid silicone rubber from sprinkler 10a can be controlled by the number and size of holes 10c, the degree of reduced pressure in receiving section 3a, the supplied amount and supplying rate of the liquid silicone rubber from supply pipe 5, or the like. In addition, even in the case of replacing holes 10c with slits 10d shown in Fig. 3, the same operations can be carried out.

The liquid silicone rubber discharged from sprinkler 10a into receiving section 3a of tank 1a is defoamed and stored in receiving section 3a.
When a specified amount of the liquid silicone rubber stored therein, valve 8a is closed. The inner circumstance of receiving section 3a is under reduced pressure. For this reason, air bubbles can be naturally removed from the liquid surface of the stored liquid silicone rubber. As described above, even if air is contaminated in the liquid silicone rubber supplied from supply pipe 5 and air bubbles are contaminated in the liquid silicone rubber, effective removal of air bubbles can be performed by a simple mechanism in which the liquid silicone rubber is discharged under reduced pressure in the state in which the surface area thereof is increased.

Next, a discharging operation is carried out as follows: The valve of recovering pressure, which is not shown in the drawing, is opened, and the inner circumstance of receiving section 3a is returned to a normal pressure. Valve 9a is opened in the state in which valve 9b is closed, and the defoamed liquid silicone rubber in receiving section 3a is discharged from outlet 4a to the outside of tank 1 a.

Here, in the case of discharging the high viscosity fluid such as a liquid silicone rubber, so-called "rat hole" may occur at the directly upper part of outlet 4a, as shown in Fig. 4. If the rat hole occurs, air bubbles may be contaminated again in the liquid silicone rubber discharging from outlet 4a. Therefore, in tank 1 a of defoaming device A shown in Fig. 1, in order to prevent the occurrence of a rat hole, the liquid silicone rubber is discharged from outlet 4a in the state of contacting plate 11a to the liquid surface of the liquid silicone rubber close to at least outlet 4a.

Plate 11a is vertically movable by means of actuator 13a via rod 12a. For this reason, in accordance with lowering of the liquid surface of the defoamed liquid silicone rubber in receiving section 3a, plate 11 a is gradually downwardly moved, so that the liquid surface of the liquid silicone rubber can be always covered. In addition, in the embodiment shown in Fig. 1, plate 11 a can pass through the inner side of circular sprinkler 10a. For this reason, plate 11a lowering in accordance with lowering of the liquid surface of the liquid silicone rubber does not contact with sprinkler 10a. Therefore, the downward movement thereof is not prevented.

The defoamed liquid silicone rubber which is discharged from outlet 4a is supplied to the next step which is omitted from Fig. 1, by means of outlet tube 6 via valve 9a. When discharging of the defoamed liquid silicone rubber from tank 1 a is completed, valve 9a is closed, and plate 11 a is forced up. The aforementioned defoaming operations are repeated.

On the other hand, even in tank 1 b, the same operations as the defoaming operations and the discharging operations in tank 1a are carried out. However, in tank 1 b, the same operations as carried out in tank 1 a are not carried out. In other words, during carrying out the defoaming operation in tank 1 a, the defoamed liquid silicone rubber in which the defoaming operation is completed in tank 1b is subjected to a discharging operation. In addition, during carrying out the discharging operation of the defoamed liquid silicone rubber in tank 1a, the defoaming operation is carried out in tank 1b. Fig. 1 shows the state in which the discharging operation is carried out in tank 1b while the defoaming operation is carried out in tank 1 a.

As described above, by alternately carrying out the defoaming operation and the discharging operation of the liquid silicone rubber in tanks 1 a, 1b, defoamation of the liquid silicone rubber can be continuously carried out. In addition, the defoamed liquid silicone rubber can be continuously supplied to the next step. In particular, in the liquid silicone rubber supplied from supply pipe 5, air bubbles may be contaminated in the liquid silicone rubber. For this reason, in the case of supplying the liquid silicone rubber from the drum to supply pipe 5, it is not necessary for a large amount of the liquid silicone rubber to always remain in the drum, in order to prevent dry injection. Therefore, by using the defoaming device of the present invention, loss of the liquid silicone rubber in the drum can be controlled to a minimum.

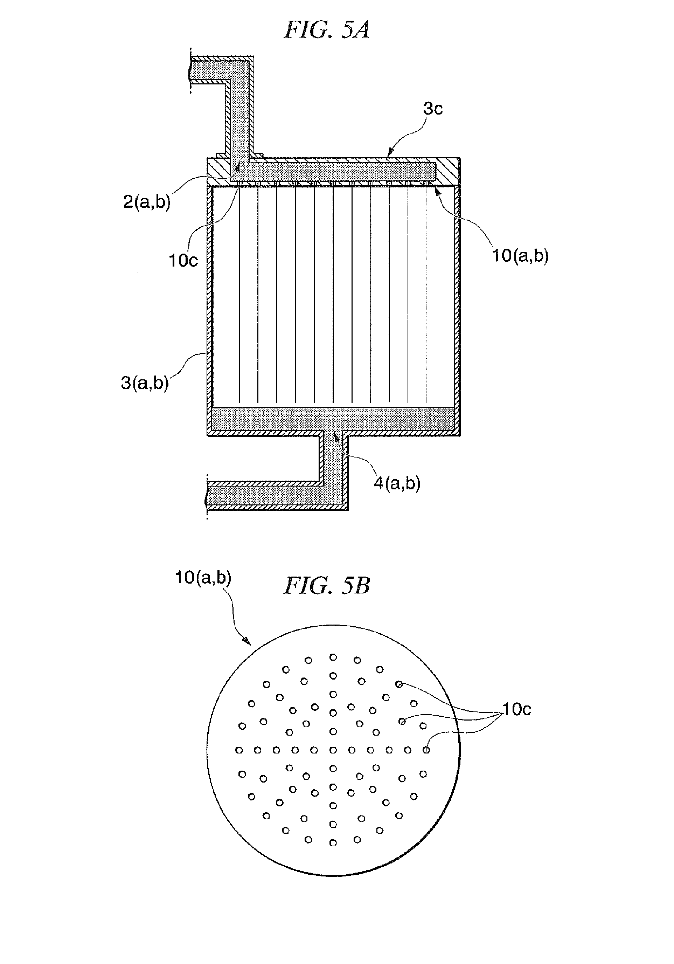

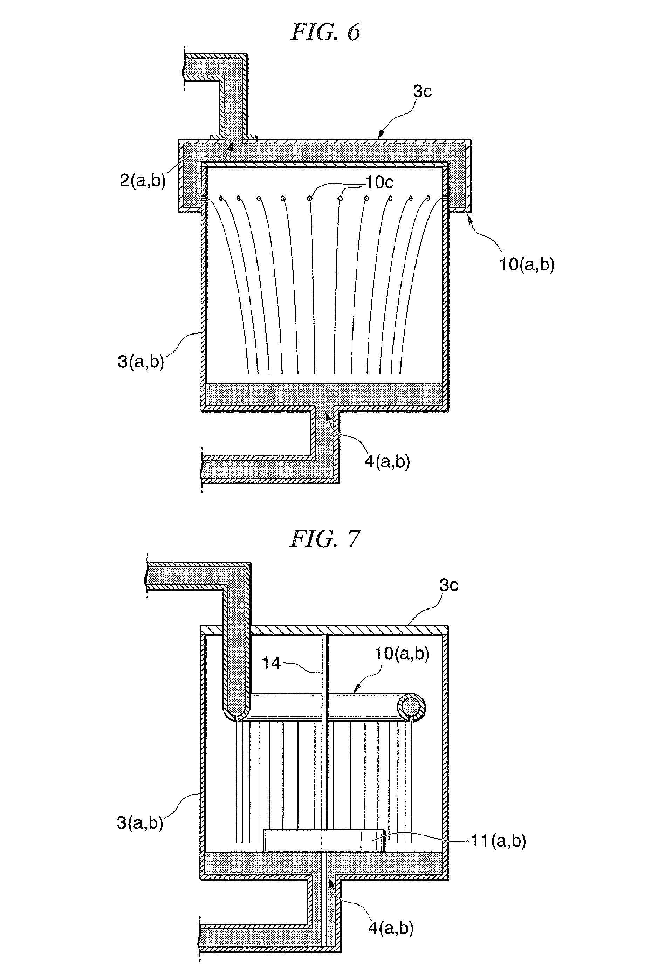

In the embodiment of the defoaming device of the present invention shown in Fig. 1, sprinklers 10a, 10b are formed separately with respect to tanks 1a, 1 b. However, sprinklers 10a, 10b may be formed by being integrated with tanks 1 a, 1b. Fig. 5 and Fig. 6 are drawings showing other embodiments of the defoaming device of the present invention. They are different from the defoaming device shown in Fig. 1, in view of forming sprinkler 10(a, b) by integrating with ceiling 3c of receiving section 3(a,b) of tank 1(a, b). In order to simplify indications, plate 11(a, b), rod 12(a, b), actuator 13(a, b), and vacuum pump 7(a, b) shown in Fig. 1 are omitted from Fig. 5 and Fig. 6.

In the embodiment shown in Fig. 5, ceiling 3c forming the upper face of receiving section 3(a, b) is hollow, and the aforementioned hollow part is communicated with supply port 2(a, b). In addition, in the embodiment shown in Fig. 5, at the lower face of ceiling 3c, many holes 10c are formed, and thereby, forming sprinkler 10(a, b), as shown in detail in Fig. 5(b). Thereby, as shown in Fig. 5(a), the liquid silicone rubber supplied from supply port 2(a, b) is discharged from holes 10c, and naturally drops downwardly to the lower part of receiving section 3(a, b). Thereby, defoaming is performed.

In the embodiment shown in Fig. 6, in the same manner as described in the embodiment shown in Fig. 5, ceiling 3c forming the upper face of receiving section 3(a, b) is hollow, and is communicated with supply port 2(a, b). In the embodiment shown in Fig. 6, many holes 10c are formed not at ceiling 3c, but at the upper part of the side wall forming receiving section 3(a, b). Sprinkler 10(a, b) in the form of a hollow jacket is provided at the upper part of said side wall to integrate with receiving section 3(a, b) so as to cover holes 10c. The hollow part of sprinkler 10(a, b) is communicated with the hollow part of ceiling 3c. For this reason, the liquid silicone rubber supplied from supply port 2(a, b) is moved to the hollow part in sprinkler 10(a, b) via the hollow part of ceiling 3c, is subsequently discharged from holes 10c provided at the upper side wall of receiving section 3(a, b), and naturally drops toward the lower part of receiving section 3(a, b), as shown in Fig. 6. Thereby, the liquid silicone rubber is defoamed.

In the embodiments shown in Fig. 5 and Fig. 6, the structure of sprinkler 10(a, b) can be simplified, as compared with the embodiment shown in Fig. 1, and the production cost of the defoaming device can be reduced. In addition, as compared with the embodiment shown in Fig. 1 in which sprinkler 10(a, b) is provided in a space within receiving section 3(a, b), a larger volume in receiving section 3 can be secured. In addition, the discharging port of the liquid silicone rubber can be set as high as possible in receiving section 3(a, b). For this reason, defoamation efficiency can be improved.

Fig. 7 is a drawing showing another embodiment of the defoaming device of the present invention. The mode of plate 11 (a, b) is different from that of the defoaming device shown in Fig. 1. Vacuum pump 7(a, b) shown in Fig. 1 is omitted from Fig. 7.

In the embodiment shown in Fig. 7, in plate 11 (a, b), a penetration path is provided at the central part thereof, the penetration path reaching both surfaces of plate 11 (a, b). Pole 14 in the form of a thin rod is inserted in the aforementioned penetration path. One end of pole 14 is fixed to outlet 4(a, b), another end is fixed to ceiling 3c which is at a vertical position with respect to outlet 4(a, b). Therefore, plate 11 (a, b) is vertically movable in receiving section 3(a, b), along with pole 14. Thereby, in accordance with lowering of the liquid surface of the liquid silicone rubber during the discharging operation, the liquid surface of the liquid silicone rubber near outlet 4(a, b) can be certainly covered.

In the embodiment shown in Fig. 7, plate 11 is used as a "lid that can be placed deep inside the pot", and it is not necessary to use rod 12 or actuator 13 shown in Fig. 1 for the vertical movement thereof. For this reason, the structures around plate 11 can be simplified, as compared with the embodiment shown in Fig. 1. Therefore, production costs for the defoaming device can be reduced.

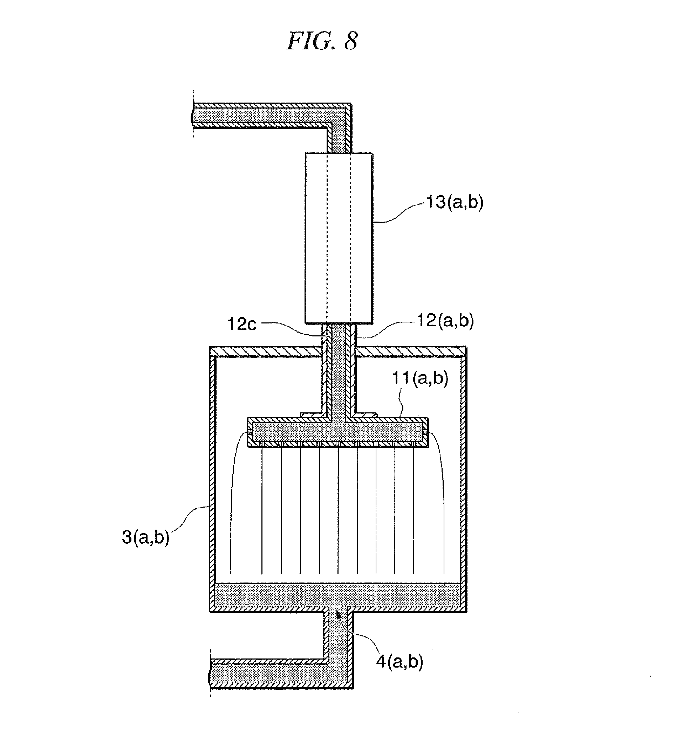

Fig. 8 is a drawing showing another further embodiment of the defoaming device of the present invention, which is different from the defoaming device shown in Fig. 1 in view of plate 11 (a, b) having a function of sprinkler 10(a, b) shown in Fig. 1. Vacuum pump 7(a, b) shown in Fig. 1 is omitted from Fig. 8.

In the embodiment shown in Fig. 8, the inner part of plate 11 (a, b) is hollow, and many holes or slits are formed in the bottom face and/or the side face of plate 11 (a, b). In addition, in rod 12(a, b), supplying channel 12c for the liquid silicone rubber is provided. The liquid silicone rubber supplied from a supply pipe, which is omitted from illustrating, is introduced into a hollow part of plate 11(a, b). Therefore, as shown in Fig. 8, the liquid silicone rubber introduced from supplying channel 12c to plate 11 (a, b) is discharged from many holes or slits provided on the bottom face and/or the side face of plate 11 (a, b) via the hollow part of plate 11 (a, b). Subsequently, the liquid silicone rubber naturally drops down toward the lower part of receiving section 3(a, b).

In the embodiment shown in Fig. 8, as compared with the embodiment shown in Fig. 1, sprinkler 10 can be omitted, and therefore, production costs for a defoaming device can be reduced. In addition, as compared with the embodiment shown in Fig. 1 in which sprinkler 10 is provided in a space within receiving section 3, a larger volume in receiving section 3 can be secured.

In the embodiment shown in Fig. 8, in the case of intending to further increase the defoaming efficiency of the liquid silicone rubber, in addition to plate 11(a, b) having a function as a sprinkler, sprinkler 10(a, b) as shown in Fig. 1 may be separately provided.

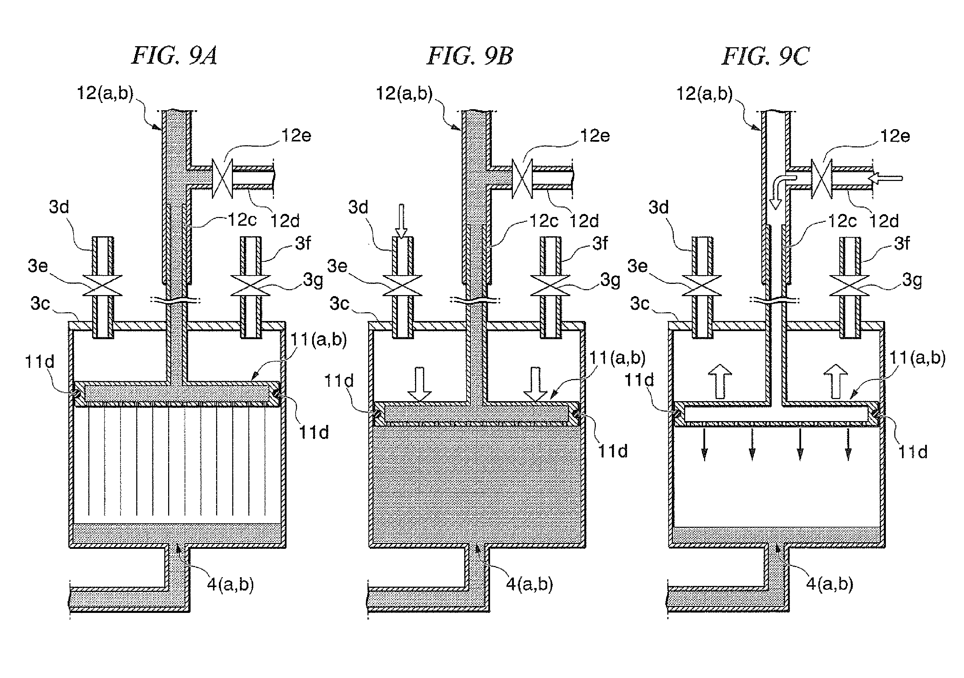

Fig. 9 is a drawing showing another further embodiment of the defoaming device of the present invention.

In the embodiment shown in Fig. 9, plate 11 (a, b) having many holes or slits at the bottom face thereof is tightly adhered to the inner wall of receiving section 3(a, b) via seal section 11 d to separate a space in receiving section 3(a, b) into two spaces. In addition thereto, the following points are different from the defoaming device shown in Fig. 8. Pipe 12d for pneumatic transportation of a gas into supplying channel 12c from a gas supply source which is not shown in the drawing is connected to rod 12(a,b) via valve 12e; and pipe 3d for pneumatic transportation of a gas into a space between ceiling 3c and plate 11(a, b) in receiving section 3(a, b) from a gas supply source, which is not shown in the drawing, and pipe 3f for discharging a gas in the aforementioned space are connected to receiving section 3(a, b) via valve 3e and valve 3g, respectively.

In the embodiment shown in Fig. 9, as shown in Fig. 9(a), during the defoaming operation, the liquid silicone rubber supplied from a supply pipe, which is omitted from illustrating, is introduced into the hollow part of plate 11(a, b) in the state in which valve 12e, valve 3e and valve 3g are closed. The liquid silicone rubber is discharged into receiving section 3(a, b) from said holes or slits, and naturally drops down toward the lower part of receiving section 3(a, b). The lower space of plate 11(a, b) in receiving section 3(a, b) is under reduced pressure by means of a vacuum pump, which is omitted from illustrating. For this reason, the liquid silicone rubber discharged from plate 11 (a, b) is well defoamed.

On the other hand, during the discharging operation of the liquid silicone rubber from outlet 4(a, b), as shown in Fig. 9(b), a gas is pneumatically transported into a space between ceiling 3c and plate 11(a, b) in receiving section 3(a, b) by opening valve 3e. Thereby, plate 11(a, b) is descended to cover the liquid surface of the liquid silicone rubber, and is moved in accordance with the liquid surface of the liquid silicone rubber descending in accordance with the discharging operation. Therefore, the occurrence of a rat hole during the aforementioned discharging operation can be prevented.

After the discharging operation from outlet 4(a, b) is completed, as shown in Fig. 9(c), valve 3e is closed, and valve 12e and valve 3g are opened to pneumatically transport a gas into supplying channel 12c. Thereby, the gas is introduced toward the lower part of the space of plate 11 (a, b) in receiving section 3(a, b) from the holes and slits at the lower face of plate 11 (a, b). For this reason, plate 11 (a, b) is increased, and is returned to the initial position.

As described above, in the embodiment shown in Fig. 9, the vertical movement of plate 11 (a, b) can be controlled only by the pneumatically transported gas from pipe 3d and pipe 12d. For this reason, actuator 13(a, b) as shown in Fig. 8 can be omitted, and the structure of the defoaming device can be simplified.

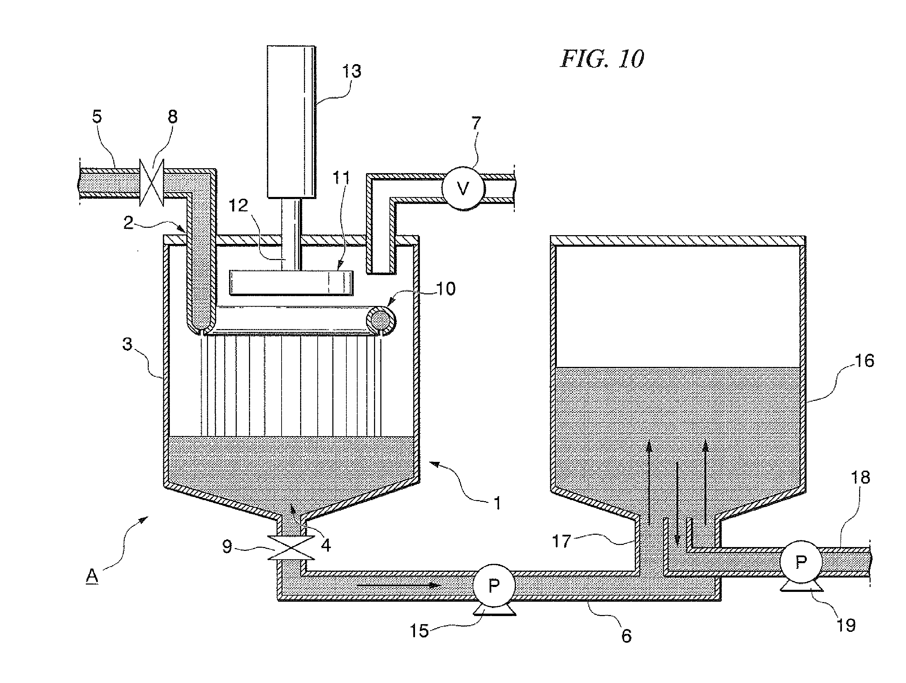

Fig. 10 is a drawing showing another further embodiment of the defoaming device of the present invention.

Defoaming device A of the present invention shown in Fig. 10 is different from the defoaming device shown in Fig. 1 in view of using one tank 1 as a container for performing defoamation. In the embodiment shown in Fig. 10, outlet tube 6 extending from outlet 4 of tank 1 is provided with liquid feeding pump 15 together with valve 9, and the end part of outlet tube 6 is integrated with open end 17 at the lower part of storage tank 16. In addition, in the embodiment shown in Fig. 10, the end part of pipe 18 having a cross-sectional area smaller than the aperture area of open end 17 is positioned in said open end 17, and pipe 18 feeds a specified amount of the liquid silicone rubber in storage tank 16 to the next step which is not shown in the drawing by means of measuring pump 19. The ceiling of storage tank 16 is provided with a vacuum pump and a valve for recovering pressure, which are not shown in the drawing, and the pressure in the storage tank 16 can be appropriately adjusted.

In defoaming device A shown in Fig. 10, tank 1 and storage tank 16 are in the form of a cylindrical form. The lower part thereof is tapered, and the container wall of each of tank 1 and storage tank 16 has a structure in which the walls of tank 1 and storage tank 16 are narrowed toward outlet 4 and open end 17, respectively. Thereby, when the liquid silicone rubber is discharged from tank 1 and storage tank 16, the remaining of a relatively large amount of the liquid silicone rubber in the tank can be prevented. Therefore, it is easy to carry out the operations such as cleaning each of the tanks at the time of changing the types of the liquid silicone rubbers to be defoamed.

In the embodiment shown in Fig. 10, feed pump 15 is driven by opening valve 9, and thereby, the defoamed liquid silicone rubber in tank 1 is fed to storage tank 16, and stored therein. At this time, it is preferable that the inner circumstance of storage tank 16 be under reduced pressure. In addition, a specified amount of the liquid silicone rubber in storage tank 16 is fed to the next step by means of measuring pump 19 via pipe 18.

As described above, in the embodiment shown in Fig. 10, the liquid silicone rubber defoamed in tank 1 is once stored, and a specified amount of the stored and defoamed liquid silicone rubber is fed as needed. For this reason, even if only one tank is used as a defoamation container, the defoamed liquid silicone rubber can be continuously supplied to the next step.

In the case in which the defoamed liquid silicone rubber is always stored in a relatively large amount in receiving section 3 of tank 1, because the usage amount per hour of the liquid silicone rubber in the next step is reduced, or the like, the defoamed liquid silicone rubber can be stably supplied from tank 1. For this reason, the liquid silicone rubber may be directly supplied to the next step from tank 1 via pipe 6 without storing the defoamed liquid silicone rubber in storage tank 16, as shown in Fig. 10.

Next, the molding system of the present invention is described.

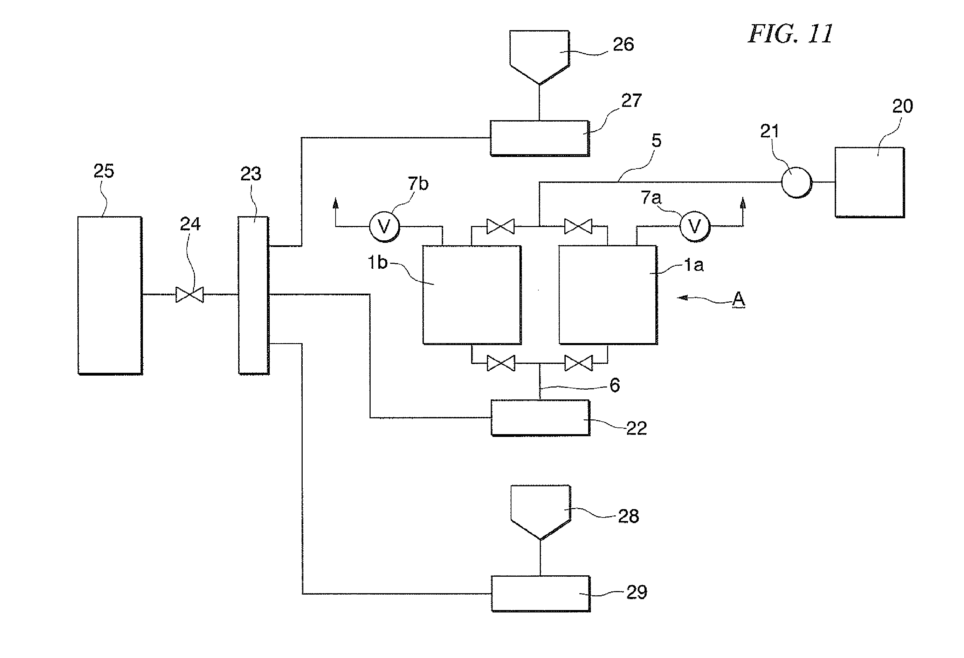

Fig. 11 is a schematic view showing one embodiment of the molding system of the present invention. In the embodiment show in Fig. 11, drum pump 21 is fixed to drum 20 for storing the liquid silicone rubber, and supply pipe 5 extending from drum pump 21 is connected to the supply port which is not shown in the drawing of defoaming device A shown in Fig. 1, provided with tanks 1 a, 1b.

An outlet, which is omitted from illustrating, of defoaming device A is connected to outlet tube 6, and said outlet tube 6 is connected to metering pump 22. Said metering pump 22 is further connected to the introduction port of mixer 23 such as a static mixer or the like, and an outlet of mixer 23 is connected to a supply port of molding machine 25 such as an injection molding machine or the like via valve 24. To the introduction port of mixer 23, a pipe extending from metering pump 27 connected to tank 26 for storing a first additive, which is an additive to be mixed in the liquid silicone rubber, and a pipe extending from metering pump 29 connected to tank 28 for storing a second additive, which is another additive to be mixed in the liquid silicone rubber, are connected. In addition, metering pump 22, metering pump 27 and metering pump 29 are drive-controllable by means of hydraulic pressure, a motor or the like. The liquid silicone rubber, first additive and second additive can be fed to mixer 23 by specified timings.

In the embodiment shown in Fig. 11, two tanks (26, 28) for additives are provided. The number of tanks is not limited to two, and can be adjusted in accordance with the types of the additives as required. In the case in which it is not necessary to mix additives immediately before molding, usage of mixer 23, tank 26 for first additive, metering pump 27, tank 28 for second additive, and metering pump 29 may also be omitted. In addition, in the case in which the volumetrical-supplying of the liquid silicone rubber is not required, usage of metering pump 22 can also be omitted.

In addition, in the case of a so-called two-liquid type in which the liquid silicone rubber is mixed with a curing agent and then the mixture is used, tank 26 for first additive or tank 28 for second additive can also be used as a tank for the curing agent. In this case, even for the curing agent, the defoaming operation is preferably preformed. Therefore, the curing agent supplied from the tank for the curing agent is preferably subjected to a defoaming treatment by means of the defoaming device of the present invention.

Next, the operations of the molding system shown in Fig. 11 are described. First, the liquid silicone rubber stored in drum 20 is supplied to defoaming device A via supply pipe 5 by means of drum pump 21. In tanks 1a, 1 b of defoaming device A, the defoamation operations of the liquid silicone rubber are performed by the steps as described above. The defoamed liquid silicone rubber is supplied to volumetrical-supplying pump 22 via outlet tube 6.

Volumetrical-supplying pump 22 feeds a specified amount of the liquid silicone rubber to mixer 23. The liquid silicone rubber is already defoamed, and for this reason, a specified amount thereof can be accurately fed to mixer 23.

On the other hand, by means of volumetrical-supplying pump 27 and volumetrical-supplying pump 29, a specified amount of the first additive and a specified amount of the second additive are fed to mixer 23 respectively from tank 26 for first additive and from tank 28 for second additive. In mixer 23, the first additive and the second additive are mixed in the liquid silicone rubber as a base material to form a molding material. The mixing operation in mixer 23 can be carried out until the mixture is uniform. The mixing modes thereof are not limited.

In addition, the molding material uniformly mixed in mixer 23 is supplied to molding machine 25 via valve 24, to form a molded product in a specified shape. The types of molding machine 25 are not limited. By appropriately selecting a molding machine, various moldings such as extrusion molding, compression molding, injection compression molding, blow molding, cast molding and the like, in addition to injection molding can be carried out in molding machine 25. In the embodiment shown in Fig. 11, mixer 23, valve 24 and molding machine 25 are independently used, but all of these or some of these may be integrated. For example, an injection molding machine equipped with a dynamic mixer can be used instead of using mixer 23, valve 24 and molding machine 25.

In the molding system shown in Fig. 11, air bubbles are removed from the liquid silicone rubber as a base material by means of defoaming device A. For this reason, no air bubbles or no chips occur in the molded product. In addition, the defoamed liquid silicone rubber is continuously supplied from defoaming device A. For this reason, it is not necessary to interrupt operations of molding machine 20 in order to defoam the liquid silicone rubber, and molding operations can be continuously performed for a long time.

In addition, when the amount of the liquid silicone rubber remaining in drum 20 is reduced, dry injection of drum pump 21 occurs, and the air may be contaminated in the liquid silicone rubber in supply pipe 5. The air contaminated in the liquid silicone rubber due to dry injection of drum pump 21 can be removed by defoaming device A. For this reason, it is not necessary to change drum 20 in the state in which a large amount of the liquid silicone rubber remains in drum 20 in order to prevent dry injection of drum pump 21. Therefore, loss of the liquid silicone rubber which is relatively expensive can be reduced, and effective molding can be performed.

The defoaming devices and the molding system of the present invention shown in Fig. 1 to Fig. 11 can be preferably used not only for the liquid silicone rubbers, but also for any viscosity fluids for which defoamation is necessary.

### BRIEF DESCRIPTION OF DRAWINGS

[Fig. 1] Fig. 1 is a cross-sectional view showing one embodiment of a defoaming device for a viscosity fluid of the present invention.
[Fig. 2] Fig. 2 is a lower plane view and a cross-sectional view of sprinkler 10(a, b) shown in Fig. 1.
[Fig. 3] Fig. 3 is a lower plane view showing another embodiment of sprinkler 10(a, b).
[Fig. 4] Fig. 4 is a schematic cross-sectional view showing a rat hole.
[Fig. 5] Fig. 5 is a cross-sectional view showing another embodiment of a defoaming device of the present invention, and a lower plane view of sprinkler 10(a, b) in the aforementioned embodiment.
[Fig. 6] Fig. 6 is a cross-sectional view showing another embodiment of a defoaming device of the present invention.
[Fig. 7] Fig. 7 is a cross-sectional view showing another embodiment of a defoaming device of the present invention.
[Fig. 8] Fig. 8 is a cross-sectional view showing another embodiment of a defoaming device of the present invention.
[Fig. 9] Fig. 9 is a cross-sectional view showing another embodiment of a defoaming device of the present invention.
[Fig. 10] Fig. 10 is a cross-sectional view showing another embodiment of a defoaming device of the present invention.
[Fig. 11] Fig. 11 is a schematic view showing one embodiment of a molding system of the present invention.

### Description of Symbols

1: tank, 2: supply port, 3: receiving section, 4: outlet, 5: supply pipe, 6: outlet tube, 7: vacuum pump, 8: valve, 9: valve, 10: sprinkler, 11: plate, 12: rod, 13: actuator, 14: pole, 15: feed pump, 16: storage tank, 17: open end, 18: pipe, 19: measuring pump, 20: drum, 21: drum pump, 22: metering pump, 23: mixer, 24: valve, 25: molding machine, 26: tank for first additive, 27: metering pump, 28: tank for second additive, 29: metering pump

## Claims

1. A defoaming device for a viscosity fluid, equipped with a container or containers having a receiving section for the viscosity fluid, and a supply port and an outlet for said viscosity fluid, communicated with said receiving section, comprising:
a supply pipe for supplying said viscosity fluid to said supply port;
a supply control device for said viscosity fluid at said supply port;
a sprinkler for discharging said viscosity fluid supplied from said supply port into said receiving section;
a pressure control device for controlling a pressure in said receiving section;
an outlet tube for discharging said viscosity fluid from said outlet; and
an outlet control device for said viscosity fluid in said outlet.

2. The defoaming device according to claim 1, provided with a plurality of said containers.

3. The defoaming device according to claim 1 or 2, wherein said sprinkler has holes and/or slits for discharging said viscosity fluid.

4. The defoaming device according to any one of claims 1 to 3, wherein a plate is provided, which covers at least one part of the surface of said viscosity fluid in said receiving section, and is movable toward said outlet in said receiving section.

5. The defoaming device according to any one of claims 1 to 3, wherein said sprinkler is arranged in the form of a circle, and said plate is passable through an inner side of said circle.

6. The defoaming device according to claim 4, wherein said plate is provided with said sprinkler.

7. The defoaming device according to any one of claims 1 to 6, wherein said viscosity fluid has a viscosity ranging from 1,000 to 50,000,000 mPa·s.

8. The defoaming device according to any one of claims 1 to 7, wherein said viscosity fluid is a liquid silicone rubber.

9. A molding system comprising:
the defoaming device as recited in any one of claims 1 to 8; and
a molding machine for said viscosity fluid discharging from said outlet in said defoaming device.

10. The molding system according to claim 9, provided with a volumetrical supplier for said viscosity fluid between said defoaming device and said molding machine.
